Europäisches Patentamt

(19) European Patent Office

Office européen des brevets

(11) Veröffentlichungsnummer: **0 327 804 B1**

(12) **EUROPÄISCHE PATENTSCHRIFT**

(45) Veröffentlichungstag der Patentschrift:
21.11.91 Patentblatt 91/47

(51) Int. Cl.⁵: **F02B 41/06, F02B 75/02,**
F01N 3/20

(21) Anmeldenummer: **89100202.4**

(22) Anmeldetag: **07.01.89**

(54) **Brennkraftmaschine.**

(30) Priorität: **11.02.88 DE 3804230**

(43) Veröffentlichungstag der Anmeldung:
**16.08.89 Patentblatt 89/33**

(45) Bekanntmachung des Hinweises auf die
Patenterteilung:
**21.11.91 Patentblatt 91/47**

(84) Benannte Vertragsstaaten:
**DE FR GB**

(56) Entgegenhaltungen:
EP-A- 0 244 798
DE-A- 2 947 176
US-A- 4 541 272

(56) Entgegenhaltungen:
PATENT ABSTRACTS OF JAPAN vol. 10, no.
277 (M-519)(2333) 19 September 1986, & JP-
A-61 98942 (MITSUBISHI ELECTRIC CORP.) 17
Mai 1986,

(73) Patentinhaber: **Krupp MaK Maschinenbau
GmbH**
**Falckensteiner Strasse 2-4**
**W-2300 Kiel 17 (DE)**

(72) Erfinder: **Rautenstrauch, Malte, Dipl-.Ing.**
**Rosengarten 4**
**W-2312 Mönkeberg (DE)**

(74) Vertreter: **Hansmann, Dierk, Dipl.-Ing.**
**Jessenstrasse 4**
**W-2000 Hamburg 50 (DE)**

## Beschreibung

Die Erfindung betrifft eine Brennkraftmaschine mit einem die Verbrennungsluft vorverdichtenden ersten Teil, einem die verdichtete Luft empfangenden, mit einer Brennstoff-Einspritzvorrichtung versehenen zweiten Teil, in dem ein Luft-Brennstoff-Gemisch verbrannt wird und die dadurch freiwerdende Kraft auf ein leistungsabgebendes Teil übertragen wird, und einem mit dem zweiten Teil zusammenwirkenden, die Abgase des zweiten Teiles empfangenden und eine Zündeinrichtung aufweisenden dritten Teil, in dem die Abgase des zweiten Teils weiter verbrannt werden und die dadurch freiwerdende Kraft ebenfalls auf den leistungsabgebenden Teil übertragen wird.

Zur Verringerung des Schadstoffgehaltes, insbesondere des Stickoxidgehaltes im Abgas von Dieselmotoren, sind derzeit zwei Verfahren gebräuchlich :

erstens eine Ammoniak-Eindüsung in einen Reaktor mit den Endprodukten Stickstoff und Wasser und zweitens eine thermische Reinigung der Abgase unter Verwendung von zusätzlichem Brennstoff in besonderen Brennkammern.

Das erste Verfahren ist aufwendig hinsichtlich der Anlage- und Wartungskosten ; der Reaktor paßt sich Betriebsänderungen nur sehr langsam an.

Im zweiten Verfahren wird der zusätzliche, teure und besonders im Schiffsbetrieb auf eine bestimmte Menge begrenzte Brennstoff nur zum Erhitzen der Abgase eingesetzt, wobei die Menge das für den Betrieb der Antriebsanlage insgesamt aufzuwendenden Brennstoffs sich leicht verdoppeln kann und, wenn kein entsprechender Wärmebedarf besteht, schlecht genutzt ist.

Bei einer nach dem Oberbegriff, z.B. aus der DE-C-2947176. bekannten Maschine wird dem Problem der Vermeidung von Stickoxiden noch keine Aufmerksamkeit gewidmet.

Die Abgase von Dieselmotoren lassen sich außerdem mit den handelsüblichen sogenannten "Dreiwegekatalysatoren" nur schwer reinigen, weil der hohe Luftüberschuß, mit dem besonders der zweite und dritte Teil der in der DE-C-2947176 beschriebenen Maschine betrieben wird, dem im Wege steht und ein sauerstoffhaltiges Abgas den Betrieb von Dreiwegekatalysatoren erschwert.

Die Aufgabe der Erfindung besteht darin, eine schadstoffarme Brennkraftmaschine zu schaffen, deren Abgase bei einem hohen Grad an Brennstoffausnutzung möglichst frei von Stickoxiden sind.

Diese Aufgabe wird dadurch gelöst, daß die eingangs beschriebene Brennkraftmaschine nach der Erfindung dadurch gekennzeichnet sein soll, daß als vierter Teil ein die Abgase aus dem dritten Teil behandelnder Reaktor angeordnet ist, wobei ein Meßfühler in der Abgasleitung des zweiten Teiles der Maschine zur Feststellung des Sauerstoffgehaltes der Abgase und ein von dem Fühler gesteuerter Regler sowie Leitungsmittel für die Zuführung einer dementsprechenden Menge von zusätzlichem Brennstoff zu dem die Zündeinrichtung aufweisenden Teil der Maschine vorgesehen sind.

Vorteilhafterweise besonders für den Schiffsbetrieb lassen sich mindestens die ersten beiden Teile der Maschine, der Vorverdichter und die Kraftmaschine mit der Brennstoff-Einspritzvorrichtung, auf herkömmliche Art, d.h. z.B. gemäß dem Dieselprozeß mit dem üblichen Luftüberschuß, betreiben, und trotzdem ist es erfindungsgemäß möglich, als Abgasreaktor einen handelsüblichen Dreiwegekatalysator zu benutzen.

Dies läßt sich dadurch erreichen, daß sich die Menge des im Abgas des zweiten Teiles noch enthaltenen Sauerstoffs durch eine Sonde feststellen und eine dementsprechende zusätzliche Brennstoffmenge in den dritten, mit einer Zündeinrichtung versehenen Teil der Maschine einsteuern läßt, derart, daß im Abgas des dritten Teiles kein Sauerstoff mehr vorhanden ist, so daß die Benutzung eines Dreiwegekatalysators als vierter Teil nun ohne weiteres erfolgen und der eingesetzte Brennstoff vollständig für den Antrieb ausgenutzt werden kann.

So kommt es zu erfindungsgemäßen Ausführungen, bei denen ein zweiter Teil als Kolbenmaschine nach dem Dieselverfahren arbeitet und mit einer Gasturbine als drittem Teil wellenmäßig gekoppelt ist, wobei die Gasturbine sowohl einen Verdichter antreibt, der im Turbolade-Verfahren vorverdichtete Verbrennungsluft für den Dieselmotor liefert, als auch zusätzlich Leistung auf die Kurbelwelle des Dieselmotors bringt.

In Ausgestaltung der Maschine werden die Dieselabgase mittels Abgaswärmeaustauscher gekühlt oder Abgasturbinen zu Wärmenutzung verwendet. Anschließend wird erfindungsgemäß in der Abgasleitung des Dieselmotors so viel Brennstoff verbrannt, wie dem vorher gemessenen Restsauerstoff entspricht, wonach die Gase in der als dritten Teil vorgesehenen Gasturbine expandieren und die Leistung auf das Verdichterrad und über ein Planetengetriebe auf die Kurbelwelle des Dieselmotors abgeben können. Die sauerstofffreien Abgase können schließlich dem vierten Teil zur Schadstoffverminderung, dem Reaktor, z.B. nunmehr einem bekannten Dreiwegekatalysator, zugeführt werden. Die Zwischenkühlung dient vorteilhafterweise einer besseren Wärmeausnutzung, der Verringerung der Gasvolumina und dem Schutz der Turbine vor thermischer Überlastung.

Wenn auch der zweite Teil der Brennkraftmaschine als Strömungsmaschine, nämlich als Gasturbine, ausgeführt ist, ergeben sich besonders platzsparende Anordnungen, bei denen außerdem keine hin- und hergehenden Massen mehr auftreten.

Es kann jedoch besonders bei kleineren Anlagen vorteilhaft sein, die drei ersten Teile einer erfindungsgemäßen Brennkraftmaschine als Kolbenmaschinen, d.h. als Kolbenverdichterteil, Diesel-Teil und Otto-Teil, auszuführen und z.B. in einer V-förmigen Maschine ebenfalls sehr platzsparend anzuordnen.

Ein Wärmeaustauscher, der auf den Diesel-Teil folgt, hat in diesem Falle die Aufgabe, die Dieselabgase abzukühlen, damit die Eintrittstemperatur für den Otto-Teil niedriger ist, womit einer Selbstzündung vorgebeugt wird ; außerdem kann dann das Verdichtungsverhältnis im Otto-Teil vorteilhafterweise angehoben werden.

Weitere Vorzüge und erfinderische Maßnahmen gehen aus den Ansprüchen und aus den schematischen Zeichnungsfiguren einiger vorteilhafter Ausführungsbeispiele sowie aus der hier nachfolgenden Zeichnungsbeschreibung hervor. Es zeigen :

Fig. 1          ein im wesentlichen allgemeines Schema einer erfindungsgemäßen Brennkraftmaschine,

Fig. 2 bis Fig. 6          Schemata von verschiedenen Ausgestaltungen der erfindungsgemäßen Maschine.

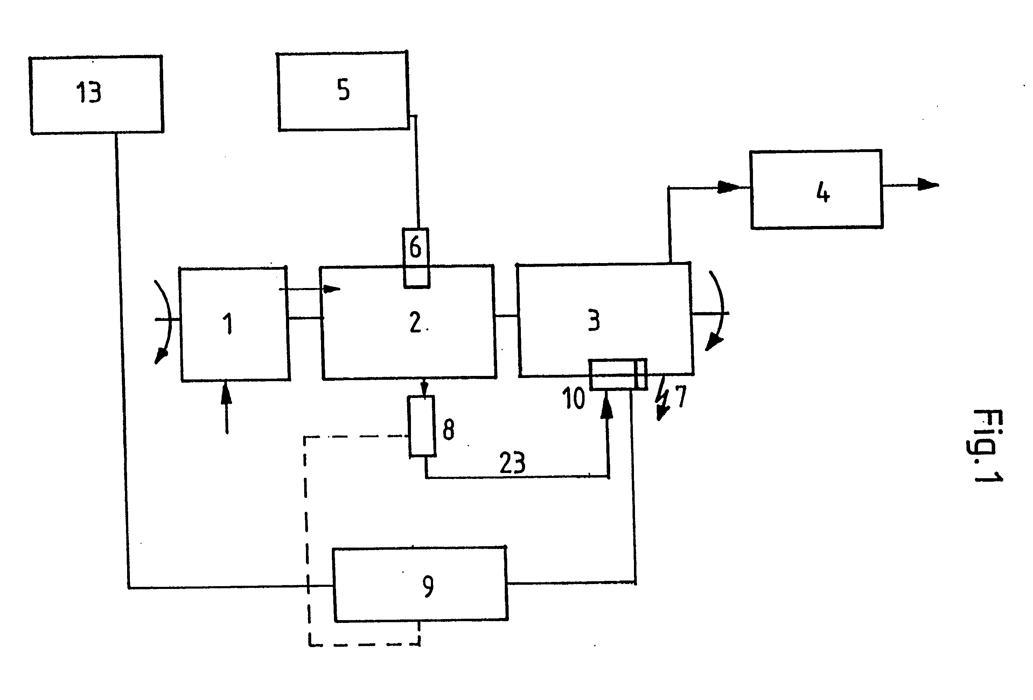

In Fig. 1 ist ein im wesentlichen allgemeines Schema einer erfindungsgemäßen Brennkraftmaschine dargestellt. Die Brennkraftmaschine umfaßt einen die Verbrennungsluft vorverdichtenden Teil 1, einen die vorverdichtete Luft empfangenden, mit einer Brennstoff-Einspritzvorrichtung 6 versehenen Teil 2 und einen eine Zündeinrichtung 7, mit einem Blitzpfeil gekennzeichnet, aufweisenden Teil 3. Nach der Erfindung folgt auf die Maschinenteile 1, 2 und 3 ein die Abgase behandelnder Reaktor 4 dabei ist in der von dem Teil 2 zu dem Teil 3 führenden Leitung ein Meßfühler 8 angeordnet, mit dem der Sauerstoffgehalt der von der Leitung 23 geführten Abgase festgestellt werden und ein Regler 9 zur Einsteuerung einer dementsprechenden Brennstoffmenge von einem Tankbehälter 13 zu einer Zuführung 10 an dem Maschinenteil 3 beeinflußt werden kann. Ausgehend von dem Behälter 5 ist eine Leitung zu der Einspritzvorrichtung 6 am Maschinenteil 2 vorgesehen.

In den Zeichnungsfiguren sind Maschinen-Wellen mit einem Drehpfeil, Zu- und Abgas mit Pfeilspitzen an der Leitung und die Impulsleitung vom Meßfühler 8 zum Regler 9 durch Strichelung gekennzeichnet.

In Fig. 1 ist noch keine spezielle Ausführungsform der dargestellten Teile 1, 2 oder 3 ins Auge gefaßt ; es kommen sowohl Kolben- als auch Strömungsmaschinen für die einzelnen Teile in Frage. So können z.B. Teil 1 als ein Kolbenverdichter Teil 2 als eine mehrzylindrige Dieselmaschine und Teil 3 als eine mehrzylindrige Otto-Maschine ausgeführt sein, die auf eine Kurbelwelle arbeiten beziehungsweise von ihr angetrieben werden. Ebenso können die Teil 1, 2 und 3 Strömungsmaschinen sein z.B. Teil 1 ein Turboverdichter, Teile 2 und 3 Gasturbinen.

Es ist jedoch auch vorteilhaft, eine Dieselmaschine als Teil 2 und eine Strömungsmaschine als Teil 3 zusammen arbeiten zu lassen, wobei die Strömungsmaschine die Abgase der Dieselmaschine aufnimmt und, gegebenenfalls über ein Getriebe, mit der Dieselmaschine zusammenarbeitet sowie den Vorverdichter 1 für diese antreibt.

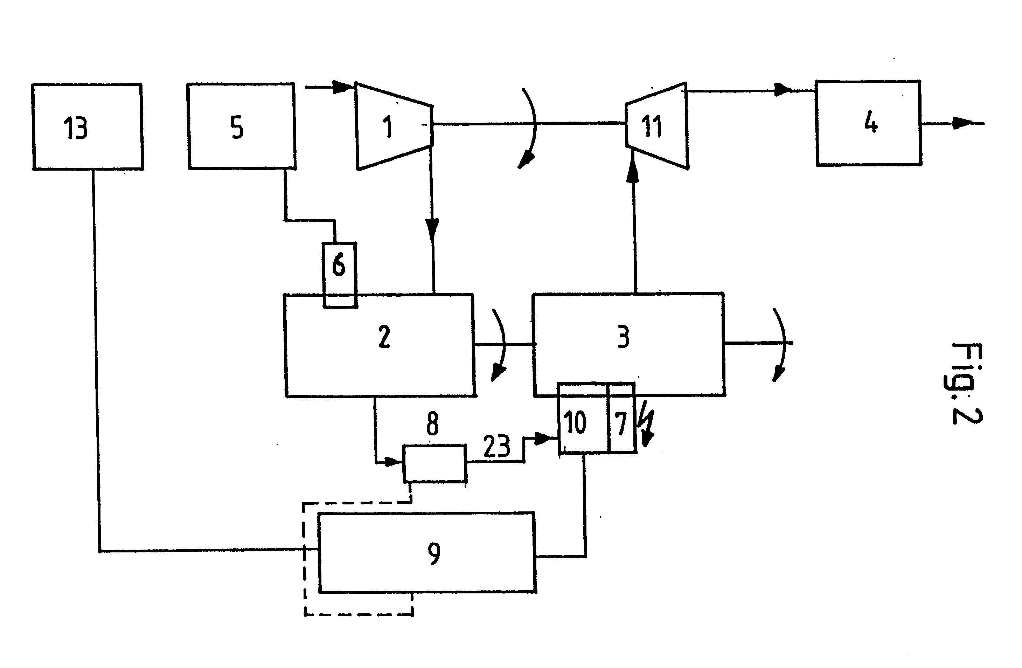

In den Fig. 2 bis 6 sind vor allem Beispiele für die Verwendung von Zusatz-Einrichtungen, wie Abgasturboverdichter 11/1 und Wärmeaustauscher 12, zur besseren Wärmeausnutzung dargestellt, die sowohl einzeln als auch zusammen in den Abgasleitungen eingeschaltet sein können.

In Fig. 2 liegt eine den Turboverdichter 1 treibende Abgasturbine 11 in der Abgasleitung von Teil 3 zum Reaktor 4.

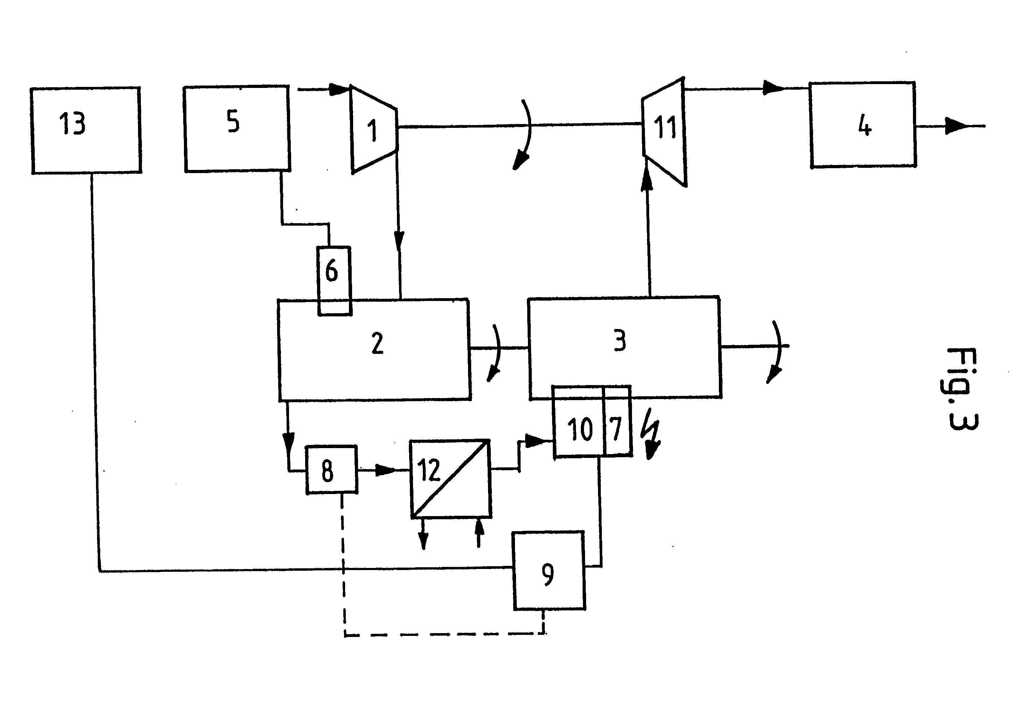

In Fig. 3 ist außer der Anordnung der Abgasturbine 11 als Antrieb für den Verdichter 1 in der Abgasleitung von Teil 3 noch vorgesehen, einen Wärmeaustauscher 12 in der von Teil 2 nach Teil 3 führenden Abgasleitung einzuschalten.

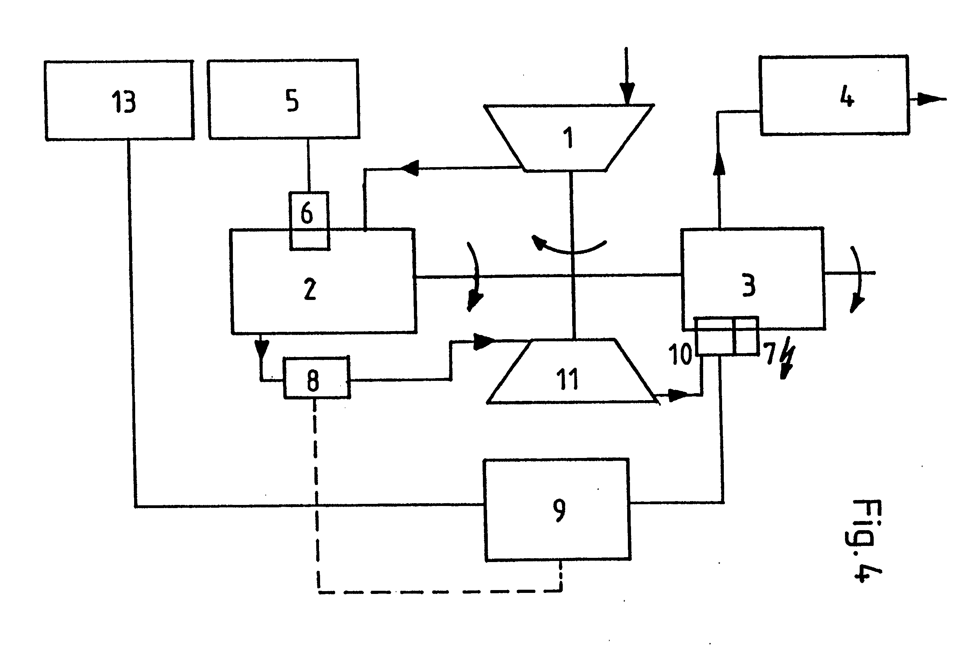

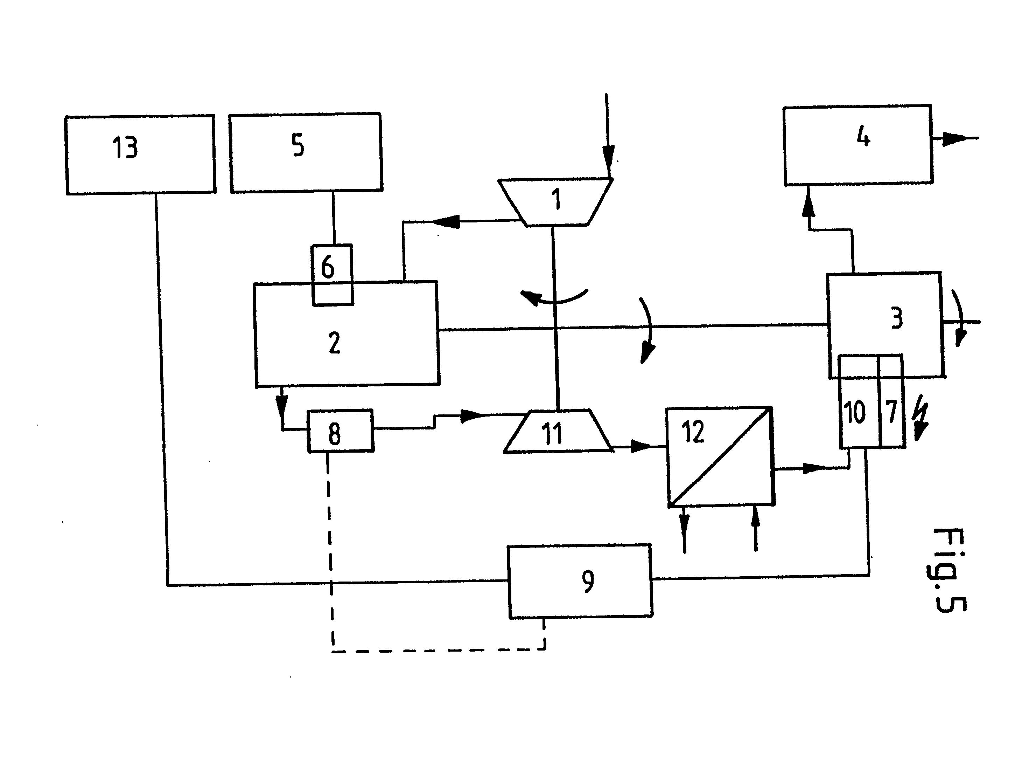

In den Fig. 4 und 5 ist die Antriebsabgasturbine 11 für den Verdichter 1 in der Abgasleitung von Maschinenteil 2 zu Maschinenteil 3 vorgesehen, in der auch der Meßfühler 8 für den Regler 9 liegt. In Fig. 5 ist außer der Abgasturbine 11 noch ein Wärmeaustauscher 12 zur Begrenzung der Eintrittstemperatur der Abgase beim Eintritt in den Maschinenteil 3 angeordnet.

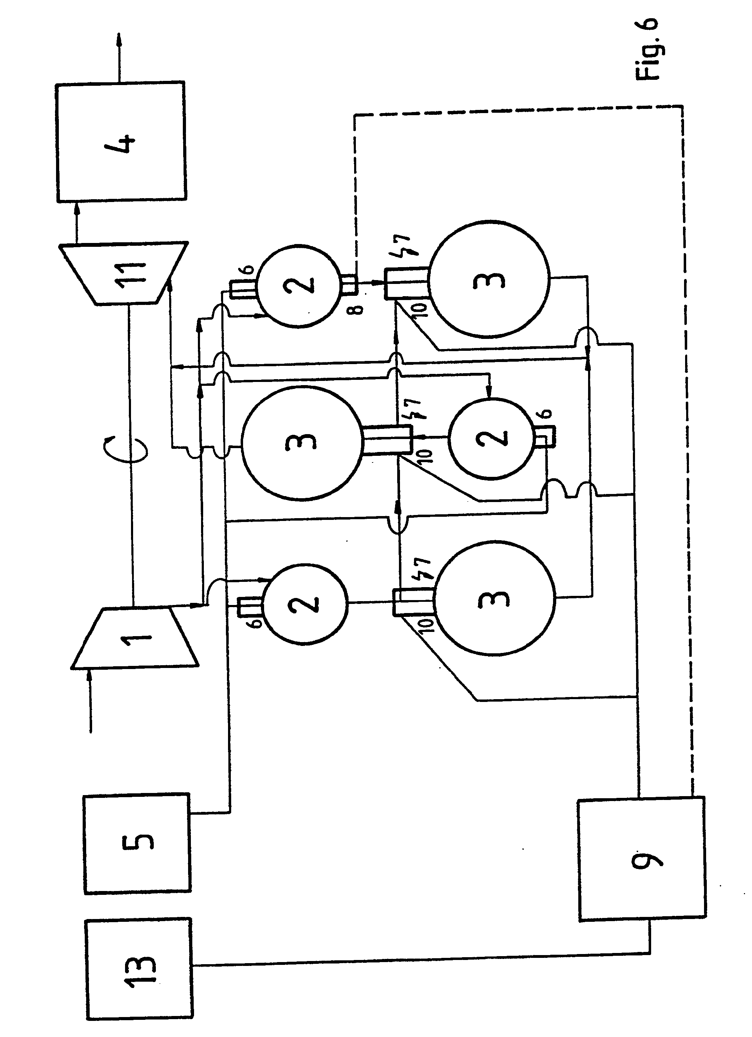

In der Fig. 6 ist als weiteres Ausführungsbeispiel einer erfindungsgemäßen Brennkraftmaschine ein Sechszylindermotor dargestellt, dessen Zylinder zu je drei in Reihen-V-Form angeordnet sind. Hierbei ist einem Dieselzylinder 2 jeweils ein Ottozylinder 3 nachgeschaltet. Die Ottozylinder 3 sind wegen des größeren Gasvolumens größer ausgeführt als die Dieselzylinder 2. Das Verdichtungsverhältnis in den Ottozylindern 3 ist klein, um die Temperaturerhöhung durch die Verdichtung ebenfalls klein zu halten. So können wegen der im Vergleich zum Dieselprozeß geringeren Zünddrücke die Kolben im ganzen so leicht gemacht werden, daß sie trotz größeren Durchmessers massenmäßig den Dieselkolben entsprechen und ein Massenausgleich vereinfacht ist. Der Übersichtlichkeit wegen ist in Fig. 6 eine Kurbelwelle nicht angedeutet.

EP 0 327 804 B1

**Patentansprüche**

1. Brennkraftmaschine mit einem die Verbrennungsluft vorverdichtenden ersten Teil (1), einem die verdichtete Luft empfangenden, mit einer Brennstoff-Einspritzvorrichtung (6) versehenen zweiten Teil (2), in dem ein Luft-Brennstoff-Gemisch verbrannt wird und die dadurch freiwerdende Kraft auf ein leistungsabgebendes Teil übertragen wird, und einem mit dem zweiten Teil (2) zusammenwirkenden, die Abgase des zweiten Teiles (2) empfangenden und eine Zündeinrichtung (7) aufweisenden dritten Teil, in dem die Abgase des zweiten Teils (2) weiter verbrannt werden und die dadurch freiwerdende Kraft ebenfalls auf den leistungsabgebenden Teil übertragen wird, dadurch gekennzeichnet, daß als vierter Teil (4) eine die Abgase aus dem dritten Teil (3) behandelnder Reaktor angeordnet ist, wobei ein Meßfühler (8) in der Abgasleitung (23) des zweiten Teiles (2) der Maschine zur Feststellung des Sauerstoffgehaltes der Abgase und ein von dem Fühler gesteuerter Regler (9) sowie Leitungsmittel für die Zuführung einer dementsprechenden Menge von zusätzlichem Brennstoff zu dem die Zündeinrichtung (7) aufweisenden dritten Teil der Maschine vorgesehen sind.

2. Brennkraftmaschine nach Anspruch 1, dadurch gekennzeichnet, daß der Reaktor (4) ein an sich bekannter Dreiwegekatalysator ist.

3. Brennkraftmaschine nach Anspruch 1 oder 2, dadurch gekennzeichnet, daß als dritter Teil (3) eine Brennkammer (10) und eine mit dem ersten und/oder dem zweiten Teil (1, 2) zusammenwirkende Gasturbine (3) vorgesehen sind.

4. Brennkraftmaschine nach einem oder mehreren der vorhergehenden Ansprüche, dadurch gekennzeichnet, daß als vorverdichtender erster Teil (1) ein Abtgasturboverdichter vorgesehen ist, dessen Turbinenteil (11) mit der Abgasleitung des zweiten und/oder dritten Teiles (2, 3) verbindbar ist.

5. Brennkraftmaschine nach einem oder mehreren der vorhergehenden Ansprüche, dadurch gekennzeichnet, daß in der Abgasleitung (23) zwischen dem zweiten und dritten Teil ein Wärmeaustauscher (12) und/oder der Turbinenteil (11) eines Abgasturboverdichters vorgesehen sind.

**Claims**

1. Internal combustion engine having a first part (1) which supercharges the combustion air, a second part (2) which receives the compressed air, is provided with a fuel injection device (6) and in which an air-fuel mixture is burnt and the force consequently released is transmitted to a power output part, and a third part which cooperates with the second part (2), receives the exhaust gases of the second part (2), has an ignition device (7) and in which the exhaust gases of the second part (2) are further burnt and the force consequently released is similarly transmitted to the power output part, characterised in that a converter which treats the exhaust gases from the third part (3) is disposed as a fourth part (4), with there being provided a sensor (8) in the exhaust line (23) of the second part (2) of the engine for establishing the oxygen content of the exhaust gases and a controlling means (9) controlled by the sensor and line means for supplying a corresponding quantity of additional fuel to the third part of the engine having the ignition device (7).

2. Internal combustion engine according to claim 1, characterised in that the converter (4) is a known three-way catalyzer.

3. Internal combustion engine according to claim 1 or 2, characterised in that a combustion chamber (10) and a gas turbine (3) which cooperates with the first and/or the second part (1, 2) are provided as a third part (3).

4. Internal combustion engine according to one or more of the preceding claims, characterised in that, as a supercharging first part (1), an exhaust gas turbocharger is provided whose turbine part (11) is connectible to the exhaust line of the second and/or third part (2, 3).

5. Internal combustion engine according to one or more of the preceding claims, characterised in that a heat exchanger (12) and/or the turbine part (11) of an exhaust gas turbocharger are provided in the exhaust line (23) between the second and third part.

**Revendications**

1. Moteur à combustion interne comportant une première partie (1) dans laquelle l'air de combustion est préalablement comprimé, une deuxième partie (2) qui est munie d'un dispositif d'injection de combustible (6) et qui reçoit l'air comprimé, deuxième partie (2) dans laquelle un mélange d'air et de combustible est brûlé, l'énergie libérée de cette manière étant transmise à une partie débitant la puissance, et une troisième partie (3), munie d'un dispositif d'allumage (7), qui coopère avec la deuxième partie (2) et qui reçoit les gaz brûlés

4

de la deuxième partie (2), troisième partie (3) dans laquelle les gaz brûlés de la deuxième partie (2) sont encore brûlés, l'énergie libérée de cette manière étant également transmise à la partie débitant la puissance, le moteur à combustion interne étant caractérisé en ce que comme quatrième partie (4), il est prévu un appareil de réaction traitant les gaz brûlés sortant de la troisième partie (3), un capteur de mesure (8) monté sur le conduit à gaz brûlés (23) de la deuxième partie (2) du moteur étant prévu pour relever la teneur en oxygène des gaz brûlés et un régulateur (9) commandé par le capteur, ainsi qu'un système de conduits étant prévus pour l'amenée d'une quantité convenable de combustible supplémentaire à la troisième partie du moteur comportant le dispositif d'allumage (7).

2. Moteur à combustion interne suivant la revendication 1, caractérisé en ce que l'appareil de réaction (4) est un catalyseur à trois voies de genre connu en soi.

3. Moteur à combustion interne suivant l'une ou l'autre des revendications 1 et 2, caractérisé en ce que comme troisième partie (3), il est prévu une chambre de combustion (10) et une turbine à gaz (3) coopérant avec la première partie (1) et/ou avec la deuxième partie (2).

4. Moteur à combustion interne suivant l'une ou plusieurs des revendications précédentes, caractérisé en ce que comme première partie (1), dans laquelle a lieu la compression préalable, il est prévu un turbocompresseur à gaz brûlés dont la partie turbine (11) peut être reliée au conduit à gaz brûlés de la deuxième partie (2) et/ou de la troisième partie (3).

5. Moteur à combustion interne suivant l'une ou plusieurs des revendications précédentes, caractérisé en ce que sur le conduit (23) se trouvant entre la deuxième et la troisième partie, il est prévu un échangeur de chaleur (12) et/ou la partie turbine (11) d'un turbocompresseur à gaz brûlés.

# Fig.1

# Fig.2

Fig. 3

Fig. 4

Fig.5

Fig. 6

EP 0 327 804 B1